# FASCICULE DE BREVET EUROPEEN

(11) **EP 2 019 731 B1**
(45) Date de publication et mention de la délivrance du brevet: **07.07.2010**
(21) Numéro de dépôt: 07788814.7
(22) Date de dépôt: 16.05.2007
(51) Int. Cl.: B03B 9/06, B07C 5/34, B09B 3/00

(54) **PROCEDE POUR LE RECYCLAGE DE MATIERES PROVENANT D'OBJETS USAGES**
VERFAHREN ZUR RÜCKGEWINNUNG VON MATERIALIEN AUS GEBRAUCHTEN OBJEKTEN
METHOD FOR RECYCLING MATERIALS FROM USED OBJECTS

(30) Priorité: 22.05.2006 FR 0604578
(43) Date de publication de la demande: 04.02.2009
(73) Titulaire: Lambert, Claude, 91240 St-Michel-sur-Orge (FR); Hachin, Jean-Michel, 92300 Levallois Perret (FR)
(72) Inventeur: Lambert, Claude, 91240 St-Michel-sur-Orge (FR); Hachin, Jean-Michel, 92300 Levallois Perret (FR)
(74) Mandataire: de Saint-Palais, Arnaud Marie
(86) Numéro de dépôt international: PCT/FR2007/000842
(87) Numéro de publication internationale: WO 2007/135280

(56) Documents cités:
- DE-A1- 3 934 969
- DE-A1- 4 105 586
- DE-A1- 10 344 861

## Description

La présente invention concerne un procédé pour le recyclage de matières provenant d'objets usagés.

D'une manière générale, on sait qu'à l'heure actuelle d'importants efforts sont faits dans le but de recycler autant que possible les matériaux utilisés dans les produits manufacturés mis au rebut.

Néanmoins, ce problème s'avère excessivement difficile à résoudre dans le cas où le produit que l'on veut traiter en vue du recyclage est de nature complexe et comprend une multiplicité de pièces réalisées en des matériaux différents.

Tel est notamment le cas des appareils électroniques ou même des automobiles.

Dans ces deux cas, le recyclage implique un démontage des appareils et un tri des composants, de manière à rassembler ceux qui sont réalisés en un même matériau.

Il est clair que ce processus ne peut convenir que dans le cas où l'on utilise une main d'oeuvre bon marché et ne se prête pas à une industrialisation automatisée.

Le document DE-A1-4105 586, qui est considéré comme l'état de la technique le plus proche du sujet de la revendication, décrit un procédé de recyclage de matières provenant d'objets usagés selon le préambule de la revendication 1.

Pour tenter de résoudre ces problèmes, on a proposé de broyer les appareils, de manière à les réduire en morceaux de dimensions prédéterminées. Ces morceaux font ensuite l'objet d'un tri sélectif par des moyens classiques par exemple, par flottaison, par triage magnétique... Toutefois, ces méthodes ne couvrent pas toute la gamme des produits. En particulier, elles ne permettent pas d'effectuer un tri sélectif entre divers types de matière plastique ou bien de sélectionner un morceau d'appareil incluant un composant électronique renfermant une matière rare et/ou précieuse.

L'invention a donc plus particulièrement pour but de résoudre ce problème grâce à un procédé permettant d'effectuer un recyclage de différentes matières susceptibles d'être présentes dans une multiplicité d'objets, indépendamment de la nature desdites matières et/ou desdits objets.

Selon l'invention, ce procédé comprend une séquence opératoire selon la revendication 1 comportant les phases suivantes :
- Une phase préalable dans laquelle on effectue une classification des matières à recycler, indépendamment des objets dans lesquels ces matières sont censées être présentes avec l'attribution, pour chacune des matières classifiées, d'un code d'identification signifiant la présence d'au moins un marqueur chimique spécifique, détectable à distance sans contact, cette phase préalable pouvant en outre comprendre la saisie et la mise en mémoire de données d'identification spectrophotométrique desdits marqueurs.
- Une phase de marquage sélectif des objets, des parties d'objets et/ou des composants des objets, incluant les matières à recycler, conformément à l'attribution affectée selon ladite classification, cette phase de marquage étant effectuée de préférence lors de la fabrication de l'objet ou même lors d'une étape subséquente de la vie des objets.
- Une phase de concentration des matières à recycler présentes dans lesdits objets, cette phase comprenant :
   - le broyage des objets en particules de dimensions prédéterminées en fonction de la nature desdits objets et desdits composants,
   - la détection à distance des marqueurs susceptibles d'être portés par chacune des particules, l'identification de la matière à recycler grâce à l'analyse du marqueur et l'extraction des particules ayant fait l'objet de la détection et de l'identification d'un marqueur, et leur aiguillage dans une zone de stockage spécifique dudit marqueur et donc de ladite matière à recycler correspondant à ce marqueur.

Avantageusement :
- le procédé pourra comprendre, préalablement à la phase d'extraction, l'attribution aux marqueurs et donc aux matières à recycler, d'un classement par ordre de préférence, de manière à ce que, lorsque plusieurs marqueurs ont été détectés su une même particule, cette particule soit aiguillée en prenant en compte le marqueur dont le classement est le plus élevé ; à l'inverse, on pourra procéder par élimination en rejetant les particules pour lesquelles certains marqueurs ou combinaisons de marqueurs ont été identifiés,
- les marqueurs pourront consister en des marqueurs chimiques qui, lorsqu'ils sont excités par un rayonnement lumineux incident, émettent des rayonnements énergétiques dont les spectres de fréquence sont discernables les uns par rapport aux autres et par rapport aux objets et aux substances dans lesquelles ils sont destinés à être incorporés,
- l'étape d'identification pourra s'effectuer par analyse spectrophotométrique des particules d'objets, composants ou des matières issues du broyage, de manière à détecter les susdits paramètres, notamment la présence ou l'absence de marqueurs et la détermination d'un code d'identification de la matière à recycler présente dans ou sur lesdites particules.

Dans le procédé précédemment décrit, la phase d'analyse spectrophotométrique pourra comprendre une séquence comportant les étapes suivantes :
- l'irradiation de l'objet ou de la particule marquée à l'aide d'un faisceau lumineux à large spectre de fréquence,
- l'envoi des ondes transmises ou réfléchies par l'objet ou la particule sur un élément dispersif qui les dévie de manière à obtenir un spectre lumineux de l'intensité lumineuse en différentes zones du spectre correspondant à des plages de longueurs d'ondes différentes,
- la détection de l'intensité lumineuse dans chacune desdites zones,
- la comparaison de cette intensité avec une ou plusieurs valeurs de seuil spécifiquement attribuées à cette zone et qui ont été préalablement enregistrées en mémoire,
- le résultat de cette comparaison contribuant à la détermination du code d'identification de la matière à recycler.

Par ailleurs, la détermination des zones du spectre à analyser, de même que les différents paramètres affectés à chacune de ces zones, pourront être effectués par le système, à partir des susdites données d'identification spectrophotométrique préalablement stockées en mémoire. Cette solution permet d'obtenir une meilleure fiabilité des résultats et d'alléger considérablement la puissance des moyens de traitement utilisés.

Les paramètres relatifs à la présence ou l'absence des marqueurs dans la combinaison attribuée et utilisés pour la détermination d'un code d'identification pourront notamment inclure :
- la présence ou non de fluorescence, et/ou
- une durée de fluorescence supérieure ou inférieure à au moins une valeur de seuil, et/ou
- la présence ou l'absence d'un pic à une longueur d'onde préétablie ainsi, qu'éventuellement, l'amplitude et/ou la largeur de ce pic, et/ou
- des hauteurs de pic d'émission correspondant à une concentration de marqueurs supérieure ou inférieure à une ou plusieurs valeurs de seuil prédéfinies.

Pour augmenter le nombre de combinaisons possibles, des concentrations différentes de marqueurs sont utilisées pour obtenir des raies d'intensité différente.

En outre, pour s'affranchir de tous les facteurs optiques susceptibles de perturber la lecture et l'analyse spectrophotométrique subséquente, l'intensité lumineuse émise par le générateur de rayonnement lumineux pourra être asservie en fonction de l'écart entre la valeur de l'intensité lumineuse détectée dans une plage de fréquence prédéterminée non affectée par la présence des marqueurs et d'une valeur de consigne prédéterminée.

Cette mesure s'avère nécessaire lorsque l'on utilise plusieurs niveaux d'intensité en tant que paramètres.

Avantageusement, l'un des marqueurs présents dans un code d'identification pourra être utilisé en tant qu'étalon servant de référence pour la détermination de la présence, de l'absence et/ou de l'intensité des autres marqueurs, notamment en vue d'effectuer des corrections et des calibrages permettant de s'affranchir de bruits pouvant par exemple provenir de la composition de la substance ou de l'objet, des variations de positionnement telles que l'angle d'incidence, la distance à l'objet ou de matière transparente enveloppant ou entourant cette substance ou cet objet, ou d'une diminution du signal due à la présence de produits étrangers (salissures, ...) ou d'une diminution éventuelle du signal résultant d'une exposition prolongée aux intempéries ou au vieillissement de l'objet.

En conséquence, le procédé selon l'invention pourra en outre comprendre :
- le choix préalable de l'un des susdits marqueurs et l'attribution de ce marqueur en tant qu'étalon à un type de produit ou de substance et/ou pour une période de temps prédéterminée,
- l'affectation à ce marqueur de données d'identification et de données spécifiques à sa fonction d'étalon et la mémorisation de ces données,
- lors d'une phase d'authentification, la détermination du marqueur utilisé en tant qu'étalon, à partir des données d'identification précédemment mémorisées, la comparaison de données relatives à ce marqueur étalon obtenues lors de l'analyse spectrophotométrique de l'objet ou de la substance, avec les susdites données spécifiques précédemment mémorisées,
- le calcul de correction à apporter à l'analyse spectrophotométrique à partir du résultat de cette comparaison,
- la détection de la présence, de l'absence et/ou de l'intensité des marqueurs à partir des résultats de l'analyse spectrophotométrique corrigée,
- la détermination du code d'authentification de l'objet ou de la substance à partir de la présence, de l'absence et/ou de l'intensité desdits marqueurs.

Un avantage de cette solution consiste en ce qu'elle permet l'utilisation de très faibles concentrations (de quelques ppm à quelques centaines, de préférence quelques dizaines de ppm ou parties par million) de marqueurs chimiques ayant chacun un signal luminescent caractéristique. Néanmoins, ces concentrations peuvent éventuellement atteindre quelques pourcent dans le cas de matrices particulières, telles que colorées ou noires. Il en résulte :
■ La possibilité d'utiliser en tant que marqueurs chimiques, des nano-matériaux, c'est-à-dire des particules ou des structures dont la taille se mesure en nanomètres (ou milliardièmes de mètre). On utilise ici la propriété relative au fait que plus la taille des particules est petite, plus le rapport surface/volume augmente et, en conséquence, plus l'analyse spectrophotométrique est significative.
■ Compte tenu des très faibles quantités utilisées, les propriétés physiques et chimiques essentielles de la matrice dans laquelle le marqueur est ajouté sont inchangées.
■ Pour la même raison, le coût du marqueur est faible.
■ Les marqueurs pourront être :
   a) Noyés dans la masse : A titre d'exemple, ces marqueurs peuvent être incorporés à une matrice plastique dans laquelle le marqueur peut avoir pour but d'identifier le titre et le grade du polymère, le producteur, la traçabilité, l'authentification de l'objet, etc..
   b) Disposés en surface, par exemple :
      - par imprégnation (par exemple dans un textile, une teinture...),
      - par enduction (dépôt de vernis, peinture, pulvérisation) sur différents supports, par exemple des pièces métalliques d'aviation, que ce soit sur l'ensemble de la surface ou ponctuellement (sérigraphie, dépôt au tampon),
      - sous forme d'étiquettes marquées en partie visible ou non.

De même, le code d'identification pourra être déterminé à partir de la présence ou de l'absence de marqueurs noyés dans la masse et de la présence ou de l'absence de marqueurs disposés en surface, par exemple dans un revêtement tel qu'un vernis ou une peinture.

Avantageusement, ce revêtement pourra comprendre une zone réfléchissante recouverte d'une couche transparente contenant des marqueurs. Cette solution permet ainsi d'effectuer une spectrophotométrie par réflexion qui réduit considérablement les pertes énergétiques.

Les données d'identification pourront comporter la combinaison de marqueurs choisis, les longueurs d'onde des raies caractéristiques, leur intensité, la durée d'une fluorescence éventuelle...

Ainsi, il n'est pas nécessaire de couvrir toutes les longueurs d'onde, il suffit d'analyser les plages de valeurs correspondant aux raies attendues qui sont identifiées à partir du code des données d'identification spectrophotométrique préalablement stockées en mémoire, afin de vérifier leur présence ou leur absence sans se préoccuper des zones situées hors de ces plages.

Dans le cas du recyclage du plastique, on pourra envisager d'utiliser une combinaison de marqueurs par type de plastique ou par grade de plastique, ce qui permet ensuite de les trier par type ou par grade une fois l'identification réalisée.

Le susdit code d'identification pourra résulter d'une combinaison de marqueurs et pourra consister en un nombre binaire dont les chiffres binaires correspondent chacun à la présence ou l'absence d'un marqueur.

L'invention ne se limite pas à ces différents types d'application.

Ainsi, notamment, la combinaison de marqueurs pourra en outre permettre d'obtenir des données d'identification relatives au produit lui-même, à sa fabrication (par exemple son numéro de série), au fabricant et, éventuellement, à un distributeur.

Ces dispositions pourront permettre d'assurer un traçage des objets ou des produits marqués.

Des modes d'exécution de l'invention seront décrits ci-après, à titre d'exemples non limitatifs, avec référence aux dessins annexés dans lesquels :
Les figures 1 et 2 sont des vues schématiques de deux objets dont on souhaite recycler certaines matières constitutives, la figure 1 étant une coupe schématique d'un appareil électronique et la figure 2 étant une vue de côté d'une automobile ;
La figure 3 est un schéma synoptique d'une installation de recyclage ;
La figure 4 est une représentation schématique d'un dispositif d'identification d'objets ou de fragments d'objets utilisable dans le procédé selon l'invention.

Comme précédemment mentionné, l'invention a pour but de permettre un recyclage sélectif de matières contenues dans des objets pouvant présenter une structure complexe dans laquelle coexistent des matériaux les plus divers dont certains peuvent présenter une valeur importante en matière de récupération ou de recyclage.

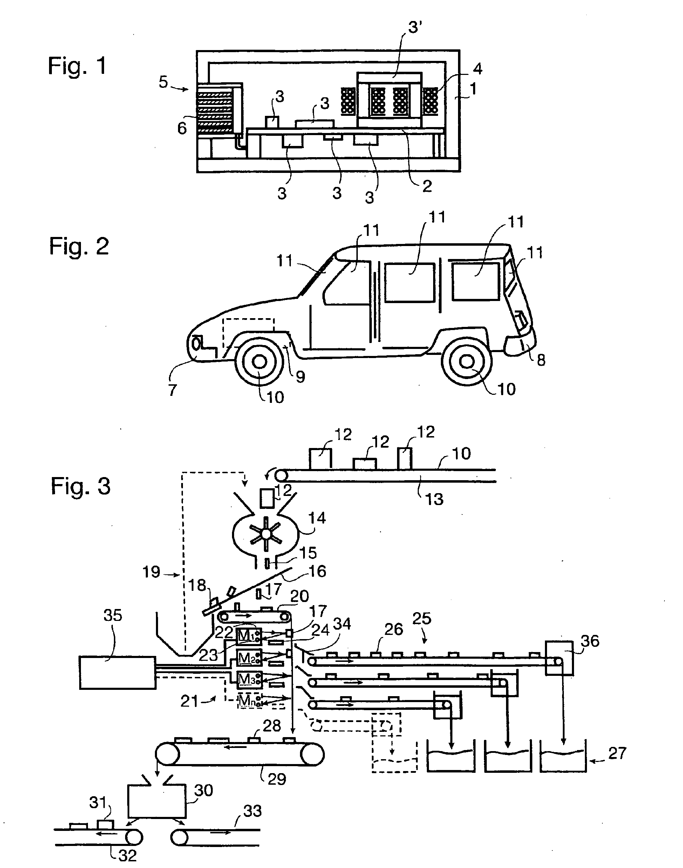

Les figures 1 et 2 montrent deux objets posant des problèmes importants de recyclage, étant entendu que ces deux exemples ne sont pas limitatifs et que l'invention peut s'appliquer à de nombreux autres objets.

L'objet représenté sur la figure 1 est un appareil comportant un circuit électronique logé dans un boîtier 1. Ce circuit électronique est porté par une carte de circuit imprimé 2 et comprend une multiplicité de composants électroniques 3. Sur ce circuit imprimé est fixé un trarsformateur 3' comprenant une armature métallique et des enroulements de cuivre 4. Ce circuit électronique est connecté à un connecteur multibroches 5 dont les broches 6 sont dorées et/ou argentées.

Conformément à l'invention, la première étape du procédé de recyclage de cet appareil s'effectue lors de la réalisation de l'objet. Cette étape comprend le marquage des parties de l'objet contenant les matières que l'on souhaite recycler. Dans cet exemple, ce marquage pourra concerner :
- Le boîtier 1 dans le cas où il est réalisé en matière plastique. Ce marquage peut être fait dans la matière elle-même ou éventuellement au niveau d'une couche superficielle (vernis ou peinture).
- Pour certains composants électroniques 3 contenant des matières rares : le marquage est incorporé à un enduit de surface recouvrant le composant.
- Le bobinage 4 du transformateur : le marquage peut être incorporé dans la couche de vernis recouvrant le fils de cuivre du bobinage.
- Les broches de connexion : le marquage pourra être réalisé dans la matière isolante supportant les broches.

Les parties réalisées en du métal présentant des propriétés magnétiques ne font pas l'objet d'un marquage en raison de l'efficacité des procédés classiques.

Bien entendu, à chacune des autres parties que l'on veut recycler est attribué un marqueur spécifique qui constitue un identifiant de la matière présente dans cette partie, que l'on désire recycler.

Dans le cas de la voiture représentée sur la figure 2, les parties faisant l'objet d'un marquage pourront comprendre :
- les éléments réalisés en matière plastique de même nature :
   - un marquage pourra être prévu pour les parties de carrosserie en matière plastique (par exemple les pare-chocs 7, 8), un autre marquage pouvant être prévu pour les pièces en matière plastique situées sous le capot et/ou dans l'habitacle ; les marqueurs correspondants peuvent être incorporés à la matière,
- les pièces en fonte d'aluminium, notamment celles présentes dans le moteur 9 et les jantes 10 ; ici également, le marquage peut être fait dans la masse ou en surface,
- les vitres et le pare-brise : le marquage est alors fait dans la masse du verre.

Bien entendu, la liste de parties des objets faisant l'objet d'un marquage spécifique n'est pas limitative. Cette liste pourrait donc être plus importante et donner lieu à un nombre de marqueurs élevé.

A chacun de ces marqueurs correspond une matière à recycler ainsi que des données facilitant son identification spectrophotométrique.

Conformément au procédé selon l'invention, les objets faisant l'objet d'un marquage sont collectés et stockés en fin de vie en vue de procéder à des traitements de recyclage. Bien entendu, le stock d'objets destinés au recyclage peut éventuellement comprendre un mélange d'objets marqués et d'objets non marqués. De même, ces objets pourront être éventuellement partiellement démontés et soumis à un tri préalable.

Comme illustré sur la figure 3, les objets destinés au recyclage 12 sont amenés grâce à un convoyeur 13 à une unité de broyage 14 pouvant comprendre un ou plusieurs broyeurs.

Ces broyeurs sont conçus de manière à réduire les objets 12 en des particules à traiter 15, présentant des tailles prédéterminées, étant entendu que l'unité de broyage 14 peut comprendre plusieurs étages et que les particules à traiter 15 peuvent présenter des tailles différentes réparties en tranches de tailles faisant l'objet de traitements séparés.

Dans cet exemple, les particules 15 délivrées par le broyeur sont passées dans un trieur 16 (indiqué schématiquement par un crible) qui extrait les particules 17 présentant la taille souhaitée.

Les particules 18 présentant des tailles plus importantes sont ramenées au broyeur 14 par l'intermédiaire d'un système de convoyeur 19 indiqué schématiquement par une liaison en traits interrompus.

A la sortie du trieur 16, les particules 17, présentant la taille requise, sont acheminées par un convoyeur 20 jusqu'à un poste de détection et d'extraction 21. Dans ce poste de détection et d'extraction 21, les particules 17 en chute libre passent au droit d'une succession de modules de détection/extraction M₁, M₂, M₃, Mₙ comportant chacun :
- Des moyens d'irradiation 22 des particules 17 par un rayonnement lumineux émis par un générateur.
- Des moyens d'analyse spectrophotométrique 23 comprenant un élément dispersif qui reçoit la lumière transmise ou réfléchie par les particules 17 et engendre un spectre lumineux de l'intensité lumineuse en au moins plusieurs zones du spectre correspondant à des plages de longueurs d'onde différentes.
- Des moyens de détection de l'intensité lumineuse dans ladite zone.
- Des moyens de comparaison de cette intensité avec une ou plusieurs valeurs de seuil spécifiquement attribuées à cette zone et qui sont enregistrées en mémoire au titre des susdits paramètres.
- Des moyens de détermination d'un code d'identification de la matière à recycler contenue dans la particule à partir des susdits codes d'identification.
- Des moyens d'extraction consistant ici en une buse d'injection d'air comprimé 24, reliée à un circuit d'air comprimé par l'intermédiaire d'une électrovanne.
- Un circuit de commande de l'électrovanne, à partir des codes d'identification préalablement déterminés : ce circuit commande l'ouverture de l'électrovanne quant le code d'identification déterminé correspond à celui de la matière que l'on veut recycler.
- Des moyens de convoyage 25 des particules extraites 26 jusqu'à une zone de stockage 27.

Les particules 28 qui n'ont pas été extraites dans le poste de détection et d'extraction sont prises en charge par un convoyeur 29 jusqu'à un poste d'extraction complémentaire 30 pouvant entre autre comprendre des moyens d'extraction de particules contenant des éléments métalliques possédant des propriétés magnétiques.

Les particules magnétiques extraites 31 sont transmises à une zone de stockage par l'intermédiaire d'un convoyeur 32, tandis que les autres sont amenées à une autre zone de stockage par un autre convoyeur 33.

Dans cet exemple, on a représenté quatre modules de détection et d'extraction M₁, M₂, M₃, Mₙ, étant entendu que ce nombre pourrait être différent. Chaque module de détection et d'extraction M₁, M₂, M₃, Mₙ, correspond à un marqueur déterminé et donc à une matière particulière à recycler. L'extraction, sous l'effet de l'air comprimé émis par les buses, se fait par l'intermédiaire de déflecteurs 34 qui acheminent la particule détectée 26 vers le convoyeur correspondant.

Les analyses spectrophotométriques sont ici effectuées par une unité de traitement 35 qui dispose, en mémoire, d'informations relatives aux spectres relatifs aux marqueurs recherchés. Cette unité de traitement assure, par ailleurs, la commande des électrovannes qui pilotent l'admission de l'air comprimé aux buses d'injection 24.

Eventuellement, l'unité de traitement 35 pourra être couplée à un lecteur, par exemple à code à barres, destiné à identifier les objets traités 12 en amont de l'unité de broyage 14 et à déterminer, à la suite de cette identification, la nature des marqueurs et donc des matières à recycler présentes dans ces objets. L'unité de commande pourra alors déterminer l'affectation de chacun des modules de détection et d'extraction M₁, M₂, M₃, Mₙ, et éventuellement procéder à un aiguillage (bloc 36) des particules extraites 26 au niveau de ces modules vers des zones de stockage appropriées.

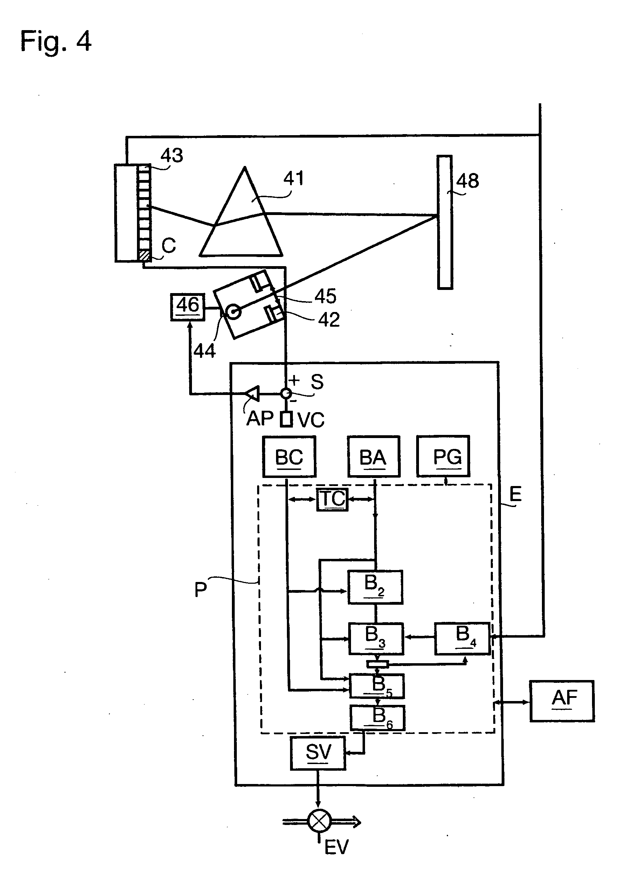

Dans l'exemple illustré figure 4, le spectrophotomètre équipant chacun des modules de détection et d'extraction comporte :
- un générateur de rayonnement lumineux à long spectre de fréquence et à intensité réglable faisant intervenir une source lumineuse 44 alimentée par un générateur de courant électrique 46 à puissance réglable ; un collimateur 42 dans l'axe duquel est placé un objectif 45, une particule à traiter 48 étant située dans l'axe optique de la source lumineuse 44,
- un élément dispersif 41 situé en regard de la particule 48, du même côté que la source lumineuse 44 ; cet élément dispersif 41 (prisme ou réseau de diffraction) décompose le rayonnement lumineux réfléchi et/ou diffusé par la particule 48 en fonction de la fréquence pour produire un spectre,
- des moyens de détection du spectre, ici une barrette de détecteurs à transfert de charges 43 qui permet de détecter les radiations émises à différents niveaux spectraux par l'élément dispersif 41 et de transmettre à un système électronique un signal numérique représentatif du spectre détecté.

Comme précédemment mentionné, la source lumineuse 44 est une source à large spectre de fréquence. Elle peut consister en des lampes à arc (type Xénon) ou en une ampoule engendrant une lumière blanche. Eventuellement, elle pourrait consister en une pluralité de sources de rayonnement laser spécifiquement choisies en fonction de la nature des marqueurs chimiques utilisés, un mélangeur optique étant alors utilisé pour effectuer un mélange des différents rayonnements émis par ces sources.

L'objectif 45 peut, par exemple, consister en un doublet achromatique.

Bien entendu, le générateur de courant électrique 46 pourra également servir à l'alimentation des circuits électroniques associés au spectrophotomètre.

Dans cet exemple, la barrette de détecteurs 43 comprend une cellule C située à une position du spectre non affectée par la présence des marqueurs chimiques.

Cette cellule C émet un signal de détection appliqué (après amplification) à l'entrée d'un soustracteur S d'une unité de traitement E dont la deuxième entrée reçoit une tension calibrée VC. La sortie de ce soustracteur S est appliquée à un amplificateur de puissance AP qui pilote le générateur 46 de manière à ce que la sortie du soustracteur S se maintienne à une valeur constante, de préférence égale à zéro.

Grâce à cette disposition, on s'assure que le niveau d'intensité lumineuse reçu par la cellule C est constant. On s'affranchit ainsi des perturbations susceptibles de faire varier l'intensité lumineuse du rayonnement émis par la particule 48.

L'unité de traitement E comprend un processeur P (indiqué en traits interrompus) associé à des moyens de mémorisation d'une base de données des codes d'identification BC, d'une base de données spectrophotométrique BA et d'un programme de gestion des différents traitements PG, ainsi qu'à des moyens d'affichage et de signalisation AF.

Ce processeur P est conçu de manière à déterminer le code d'identification du marqueur porté par la particule 48 et donc de la matière à recycler correspondante. A cet effet, il détermine tout d'abord les zones spectrales à explorer (bloc B₂) en fonction des données spectrophotométriques de la base de données BA. Il mesure l'amplitude des rayonnements lumineux reçus par les détecteurs dans lesdites zones spectrales (bloc B₃).

Dans le cas où l'on utilise un marqueur étalon, ce signal peut être corrigé (bloc B₄) avant analyse, à partir du signal numérique produit par le détecteur correspondant à ce marqueur étalon.

Le processeur P détermine ensuite (bloc B₅) le code d'identification détecté qu'il compare (bloc B₆) au code d'identification prédéterminé. Dans le cas d'une concordance entre ces deux codes, le processeur émet un signal de validation SV et commande l'ouverture de l'électrovanne EV pour obtenir l'émission d'un jet d'air comprimé qui aiguille la particule 48 vers un convoyeur correspondant.

D'une façon plus précise, l'analyse spectrophotométrique de la particule 48 à l'aide du dispositif précédemment décrit pourra comprendre :
o l'irradiation de la particule 48 au moyen de la source de rayons 44,
o la transmission des ondes réfléchies ou diffusées par la particule 48 sur l'élément dispersif 41 qui les dévie différemment en fonction de leur longueur d'onde,
o l'obtention d'un spectre de la radiation réfléchie ou diffusée grâce aux ondes planes ainsi déviées qui donnent, dans une zone de détection composée de la série de barrettes 43, une succession d'images de la source (bloc 3),
o l'échantillonnage de ce spectre puis la conversion du signal analogique en un signal numérique présentant une trame numérique prédéterminée (bloc 4),
o un fenêtrage effectué en fonction des plages de longueurs d'onde indiquées dans la base de données spectrophotométrique, de façon à ne considérer que la présence ou l'absence des raies caractéristiques des marqueurs permettant de déterminer un code lu (bloc 5),
o la comparaison des données (relatives au code d'identification) avec les données expérimentales (ou code lu) de manière à effectuer l'identification de la matière à recycler contenue dans la particule 48 (bloc 6).

Dans le cas de marqueurs fluorescents, on peut envisager de procéder à une seconde mesure après un temps δt afin de vérifier la durée de la fluorescence.

Les traceurs utilisés peuvent être organiques ou inorganiques. Ils peuvent être à base de terres rares telles que le dysprosium, l'europium, le samarium, yttrium...

Quelques marqueurs utilisés et leurs caractéristiques sont présentés à titre d'exemple dans le tableau ci-après :
Les compagnies les commercialisant sont notamment "BASF" (marque déposée), "Bayer" (marque déposée), "Glowburg" (marque déposée), "Lambert Rivière" (marque déposée), "Phosphor Technology" (marque déposée), "Rhodia" (marque déposée), SCPI,...

| **Marqueur** | **Longueur d'onde d'excitation λₑₓ+Δλ_{1/2}** | **Longueur d'onde du pic d'émission λₑₘₐₓ + Δλ_{1/2} (nm)** |
|---|---|---|
| A | 300 ± 40 | 480 ± 6 572 ± 6 |
| B | 300 ± 40 | 562 ± 10 601 ± 6 |
| C | 335 ± 35 | 470 ± 85 |
| D | 365 ± 70 | 480 ± 90 |
| E | 350 ± 20 | 612 ± 3 |
| F | 380 ± 45 | 480 ± 75 |
| G | 365 | 610 ± 50 |

Il est à noter que les marqueurs ne se limitent pas à des marqueurs commerciaux, ils peuvent être synthétisés par synthèse totale ou dérivés de marqueurs commerciaux.

Un avantage important du procédé précédemment décrit consiste en ce qu'il permet de résoudre les problèmes liés à la détection et à l'extraction de matières éventuellement présentes en très petites quantités à l'intérieur d'un objet et qui ne sont pas (voir très difficilement) détectables par des moyens classiques utilisables dans une installation de tri sélectif.

Dans le cas où la matière à recycler est contenue dans un boîtier, comme c'est le cas, par exemple d'un composant électronique, le marqueur pourra être prévu dans un revêtement appliqué sur le boîtier (par exemple, un vernis ou une peinture).

Dans le cas d'une pièce en matière plastique non recouverte d'un enduit, le marqueur pourra être incorporé à la matière. Néanmoins, cette solution pose toutefois un problème dans le cas où la matière plastique contient une charge, par exemple des pigments noirs ou foncés absorbant les rayons lumineux. Dans ce cas, il conviendra d'utiliser une source lumineuse de forte intensité émettant dans une plage de longueurs d'ondes dans laquelle l'absorption du rayonnement lumineux est minimum.

Eventuellement, il sera possible d'effectuer le marquage dans la couche de "gel coat" ou dans une couche de vernis ayant des propriétés réfléchissantes recouvrant la matière plastique pigmentée.

## Revendications

1. Procédé pour le recyclage de matières provenant d'objets usagés, comprenant une séquence opératoire comportant les phases suivantes :
- une phase préalable dans laquelle on effectue une classification des matières à recycler, indépendamment des objets (12) dans lesquels ces matières sont censées être présentes avec l'attribution, pour chacune des matières classifiées, d'un code d'identification, détectable à distance sans contact,
- une phase de concentration des matières à recycler présentes dans lesdits objets, cette phase comprenant :
- le broyage des objets (12) en particules (15) de dimensions prédéterminées en fonction de la nature desdits objets (12) et desdits composants,
- la détection à distance de chacune des particules, l'identification de la matière à recycler et l'extraction des particules (26) ayant fait l'objet de la détection et de l'identification d'un marqueur, et l'extraction des particules ayant fait l'objet de la détection et de l'identification, et leur aiguillage dans une zone de stockage spécifique (27) de ladite matière à recycler,
**caractérisé en ce que** :
- le code d'identification signifie la présence d'au moins un marqueur chimique spécifique,
- il comprend une phase de marquage chimique sélectif des objets, des parties d'objets et/ou des composants des objets, incluant les matières à recycler, conformément à l'attribution affectée selon ladite classification,
- la détection à distance comprend la détection des marqueurs chimiques susceptibles d'être portés par chacune des particules, l'identification de la matière se fait grâce à l'analyse du marqueur.

2. Procédé selon la revendication 1,
**caractérisé en ce que** la phase préalable comprend la saisie et la mise en mémoire de données d'identification spectrophotométriques desdits marqueurs.

3. Procédé selon la revendication 1,
**caractérisé en ce que** la phase de marquage est effectuée lors de la fabrication de l'objet (12) ou lors d'une étape subséquente de la vie des objets (12).

4. Procédé selon la revendication 1,
**caractérisé en ce qu'**il comprend, préalablement à la phase d'extraction, l'attribution aux marqueurs et donc aux matières à recycler, d'un classement par ordre de préférence, de manière à ce que, lorsque plusieurs marqueurs ont été détectés sur une même particule (17), cette particule (17) soit aiguillée en prenant en compte le marqueur dont le classement est le plus élevé.

5. Procédé selon l'une des revendications 1 et 2,
**caractérisé en ce que** les susdits marqueurs chimiques consistent en des marqueurs qui, lorsqu'ils sont excités par un rayonnement lumineux incident, émettent des rayonnements énergétiques dont les spectres de fréquence sont discernables les uns par rapport aux autres et par rapport aux objets et aux substances dans lesquelles ils sont destinés à être incorporés.

6. Procédé selon l'une des revendications précédentes,
**caractérisé en ce que** le susdit code d'identification résulte d'une combinaison de marqueurs et consiste en un nombre binaire dont les chiffres binaires correspondent chacun à la présence ou l'absence d'un marqueur.

7. Procédé selon l'une des revendications précédentes,
**caractérisé en ce que** l'étape d'identification s'effectue par analyse spectrophotométrique des objets, particules d'objets, composants ou matières, issus du susdit broyage.

8. Procédé selon la revendication 7,
**caractérisé en ce que** la susdite analyse spectrophotométrique comporte les étapes suivantes :
- l'irradiation de l'objet ou de la particule marquée (48) à l'aide d'un faisceau lumineux à large spectre de fréquence,
- l'envoi des ondes transmises ou réfléchies par l'objet ou la particule sur un élément dispersif (41) qui les dévie de manière à obtenir un spectre lumineux de l'intensité lumineuse en différentes zones du spectre correspondant à des plages de longueurs d'ondes différentes,
- la détection de l'intensité lumineuse dans chacune desdites zones,
- la comparaison de cette intensité avec une ou plusieurs valeurs de seuil spécifiquement attribuées à cette zone et qui ont été préalablement enregistrées en mémoire,
- le résultat de cette comparaison contribuant à la détermination du code d'identification de la matière à recycler.

9. Procédé selon l'une des revendications précédentes,
**caractérisé en ce que** la détermination des zones du spectre à analyser, de même que les différents paramètres affectés à chacune de ces zones, sont effectués par le système, à partir des susdites données d'identification spectrophotométriques préalablement stockées en mémoire.

10. Procédé selon l'une des revendications précédentes,
**caractérisé en ce que** le susdit code d'identification comprend en outre des paramètres se rapportant à :
- la présence ou non de fluorescence, et/ou
- une durée de fluorescence supérieure ou inférieure à au moins une valeur de seuil, et/ou
- la présence ou l'absence d'un pic à une longueur d'onde préétablie ainsi, qu'éventuellement, l'amplitude et/ou la largeur de ce pic, et/ou
- des hauteurs de pic d'émission correspondant à une concentration de marqueurs supérieure ou inférieure à une ou plusieurs valeurs de seuil prédéfinies.

11. Procédé selon l'une des revendications précédentes,
**caractérisé en ce que**, pour augmenter le nombre de combinaisons possibles, des concentrations différentes de marqueurs sont utilisées pour obtenir des raies d'intensité différente.

12. Procédé selon la revendication 8,
**caractérisé en ce que** l'intensité lumineuse du susdit faisceau est asservie en fonction de l'écart entre la valeur de l'intensité lumineuse détectée dans une plage de fréquence prédéterminée non affectée par la présence des marqueurs et d'une valeur de consigne prédéterminée.

13. Procédé selon l'une des revendications précédentes,
**caractérisé en ce que** l'un des marqueurs présents dans un code d'identification est utilisé en tant qu'étalon servant de référence pour la détermination de la présence, de l'absence et/ou de l'intensité des autres marqueurs, notamment en vue d'effectuer des corrections et des calibrages permettant de s'affranchir de bruits pouvant par exemple provenir de la composition de la particule ou de l'objet, des variations de positionnement telles que l'angle d'incidence, la distance à l'objet ou de matière transparente enveloppant ou entourant cette particule ou cet objet, ou d'une diminution du signal due à la présence de produits étrangers (salissures, ...) ou d'une diminution éventuelle du signal résultant d'une exposition prolongée aux intempéries ou au vieillissement de l'objet.

14. Procédé selon la revendication 13,
**caractérisé en ce qu'**il comprend en outre :
- le choix préalable de l'un des susdits marqueurs et l'attribution de ce marqueur en tant qu'étalon à un type de produit ou de substance et/ou pour une période de temps prédéterminée,
- l'affectation à ce marqueur de données d'identification et de données spécifiques à sa fonction d'étalon et la mémorisation de ces données,
- lors d'une phase d'authentification, la détermination du marqueur utilisé en tant qu'étalon, à partir des données d'identification précédemment mémorisées, la comparaison de données relatives à ce marqueur étalon obtenues lors de l'analyse spectrophotométrique de l'objet ou de la particule, avec les susdites données spécifiques précédemment mémorisées,
- le calcul de correction à apporter à l'analyse spectrophotométrique à partir du résultat de cette comparaison,
- la détection de la présence, de l'absence et/ou de l'intensité des marqueurs à partir des résultats de l'analyse spectrophotométrique corrigée,
- la détermination du code d'authentification de l'objet ou de la substance à partir de la présence, de l'absence et/ou de l'intensité desdits marqueurs.

## Claims

1. Method for recycling materials coming from used objects, comprising an operating sequence comprising the following phases:
- a preliminary phase in which a classification of the materials to be recycled is carried out, independently of the objects (12) in which these materials are assumed to be present, with the allocation, for each of the materials classified, of an identification code, detectable at a distance without contact,
- a phase of concentration of the materials to be recycled present in the said objects, this phase comprising:
-- the grinding of the objects (12) into particles (15) with predetermined dimensions according to the nature of said objects (12) and said components,
-- the detection at a distance of each of the particles, the identification of the material to be recycled and the extraction of the particles (26) that were the subject of the detection and identification of a marker, and the extraction of the particles that were the subject of the detection and identification, and their switching to a specific storage area (27) for the said material to be recycled,
**characterised in that**:
- the identification code signifies the presence of at least one specific chemical marker,
- it comprises a phase of selective chemical marking of the objects, the parts of objects and/or the components of the objects, including the materials to be recycled, in accordance with allocation made according to said classification,
- the detection at a distance comprises the detection of chemical markers liable to be carried by each of the particles, the identification of the material being made by virtue of the analysis of the marker.

2. Method according to claim 1,
**characterised in that** the preliminary phase comprises the entry and storage of spectrophotometric identification data for said markers.

3. Method according to claim 1,
**characterised in that** the marking phase is effected when the object (12) is manufactured or during a subsequent step during the life of the objects (12).

4. Method according to claim 1,
**characterised in that** it comprises, prior to the extraction phase, the allocation to the markers and therefore to the materials to be recycled of a classification by order of preference, so that, when several markers have been detected on the same particle (17), this particle (17) is switched by taking account of the marker whose classification is the highest.

5. Method according to one of claims 1 and 2,
**characterised in that** the aforementioned chemical markers consist of markers which, when they are excited by an incident light radiation, emit energetic radiation whose frequency spectra are discernable with respect to one another and with respect to the objects and substances in which they are intended to be incorporated.

6. Method according to one of the preceding claims,
**characterised in that** the aforementioned identification code results from a combination of markers and consists of a binary number, the binary figures of which each correspond to the presence or absence of a marker.

7. Method according to one of the preceding claims,
**characterised in that** the identification step is performed by spectrophotometric analysis of the objects, particles of objects, components or materials issuing from the aforementioned grinding.

8. Method according to claim 7,
**characterised in that** the aforementioned spectrophotometric analysis comprises the following steps:
- the irradiation of the marked object or particle (48) by means of a light beam with a broad frequency spectrum,
- the sending of the waves transmitted or reflected by the object or particle onto a dispersive element (41), which diverts them so as to obtain a light spectrum with a light intensity in different zones of the spectrum corresponding to different wavelength ranges,
- the detection of the light intensity in each of the said zones,
- the comparison of this intensity with one or more threshold values specifically attributed to this zone and which were previously recorded in memory,
- the result of this comparison contributing to the determination of the identification code for the material to be recycled.

9. Method according to one of the preceding claims,
**characterised in that** the determination of the zones of the spectrum to be analysed, just like the various parameters allocated to each of these zones, are performed by the system, using the aforementioned spectrophotometric identification data previously stored in memory.

10. Method according to one of the preceding claims,
**characterised in that** the aforementioned identification code also comprises parameters relating to:
- the presence or not of fluorescence, and/or
- a duration of fluorescence greater than or less than at least one threshold value, and/or
- the presence or absence of a peak at a pre-established wavelength as well as possibly the amplitude and/or the width of this peak, and/or
- emission peak heights corresponding to a concentration of markers greater than or less than one or more predefined threshold values.

11. Method according to one of the preceding claims,
**characterised in that**, in order to increase the number of possible combinations, different combinations of markers are used to obtain lines of different intensity.

12. Method according to claim 8,
**characterised in that** the light intensity of the aforementioned beam is slaved according to the difference between the value of the light intensity detected in a predetermined frequency range, not affected by the presence of markers, and a predetermined set value.

13. Method according to one of the preceding claims,
**characterised in that** one of the markers present in an identification code can be used as a standard serving as a reference for determining the presence, absence and/or intensity of other markers, in particular with a view to effecting corrections and calibrations for being free from noise that may for example result from the composition of the substance or object, variations in positioning such as the angle of incidence, the distance to the object or transparent material enveloping or surrounding this substance or object, or a diminution in the signal due to the presence of foreign bodies (dirt, etc) or any diminution in the signal resulting from prolonged exposure to weather or to aging of the object.

14. Method according to claim 13,
**characterised in that** it also comprises:
- the prior choice of one of the aforementioned markers and the allocation of this marker as a standard to a type of product or substance and/or for a predetermined period of time,
- the allocation to this marker of identification data and data specific to its function as standard and the storage of these data,
- during an authentication phase, the determination of the marker used as a standard, using identification data previously stored, the comparison of data relating to this standard marker obtained during the spectrophotometric analysis of the object or particle, with the aforementioned specific data previously stored,
- the calculation of a correction to be made to the spectrophotometric analysis from the result of this comparison,
- the detection of the presence, absence and/or intensity of the markers from the results of the corrected spectrophotometric analysis,
- the determination of the authentication code for the object or substance from the presence, absence and/or intensity of said markers.

## Patentansprüche

1. Verfahren zur Rückgewinnung von Materialien aus gebrauchten Objekten, umfassend einen Arbeitsablauf, der die folgenden Phasen umfasst:
- eine Vorphase, wobei eine Klassifizierung der zu rückgewinnenden Materialien vorgenommen wird, unabhängig von den Objekten (12), in denen diese Materialien, für jedes der klassifizierten Materialien, mit der Zuordnung eines kontaktlos auf Distanz nachweisbaren Identifizierungscodes als vorhanden angenommen werden,
- eine Konzentrierungsphase der zu rückgewinnenden Materialien, die in den Objekten vorhanden sind, wobei diese Phase folgendes umfasst:
- das Mahlen der Objekte (12) zu Teilchen (15) von vorbestimmten Dimensionen in Abhängigkeit von der Natur der Objekte (12) und der Komponenten,
- den Fernnachweis von jedem der Teilchen, die Identifizierung des zu rückgewinnenden Materials und die Extraktion der Teilchen (26), die Gegenstand des Nachweises und der Identifizierung eines Markers waren, und die Extraktion der Teilchen, die Gegenstand des Nachweises und der Identifizierung waren, und ihre Verteilung in eine spezielle Lagerzone (27) des zu rückgewinnenden Materials,
**dadurch gekennzeichnet, dass**:
- der Identifizierungscode die Gegenwart von mindestens einem spezifischen chemischen Marker angibt,
- es eine Phase der selektiven chemischen Markierung der Objekte, der Teile von Objekten und/oder der Komponenten der Objekte, die die zu rückgewinnenden Materialien einschließen, im Einklang mit der Zuordnung gemäß der Klassifizierung umfasst,
- der Fernnachweis den Nachweis der chemischen Marker, die dazu geeignet sind, von jedem der Teilchen getragen zu werden, umfasst, die Identifizierung des Materials durch die Analyse des Markers erfolgt.

2. Verfahren nach Anspruch 1,
**dadurch gekennzeichnet, dass** die Vorphase das Erfassen und Speichern von spektralphotometrischen Daten der Marker umfasst.

3. Verfahren nach Anspruch 1,
**dadurch gekennzeichnet, dass** die Markierungsphase bei der Herstellung des Objekts (12) oder in einem anschließenden Schritt der Lebensdauer der Objekte (12) durchgeführt wird.

4. Verfahren nach Anspruch 1,
**dadurch gekennzeichnet, dass** es, vor der Extraktionsphase, die Zuordnung der Marker und somit der zu rückgewinnenden Materialien, zu einer Klassifizierung durch präferentielle Reihenfolge umfasst, derart, dass, wenn mehrere Marker auf ein und demselben Teilchen (17) nachgewiesen werden, dieses Teilchen (17) unter Berücksichtigung des Markers, dessen Klassifizierung höher stehend ist, verteilt wird.

5. Verfahren nach einem der Ansprüche 1 und 2,
**dadurch gekennzeichnet, dass** die oben genannten chemischen Marker aus Markern bestehen, die, wenn sie durch eine einfallende Lichtstrahlung angeregt werden, energetische Strahlungen emittieren, deren Frequenzspektren untereinander und bezüglich der Objekte und Substanzen, in die sie zur Einarbeitung bestimmt sind, unterscheidbar sind.

6. Verfahren nach einem der vorhergehenden Ansprüche,
**dadurch gekennzeichnet, dass** der oben genannte Identifizierungscode von einer Kombination von Markern herrührt und aus einer binären Zahl besteht, deren binäre Ziffern jeweils der Gegenwart oder der Abwesenheit eines Markers entsprechen.

7. Verfahren nach einem der vorhergehenden Ansprüche,
**dadurch gekennzeichnet, dass** der Identifizierungsschritt durch spektralphotometrische Analyse der Objekte, der Teilen von Objekten, der Komponenten oder Materialien, die dem oben genannten Mahlen entstammen, erfolgt.

8. Verfahren nach Anspruch 7,
**dadurch gekennzeichnet, dass** die oben genannte spektralphotometrische Analyse die folgenden Schritte umfasst:
- die Bestrahlung des markierten Objekts oder Teilchens (48) mit Hilfe eines Lichtstrahls mit breitem Frequenzspektrum,
- das Weiterleiten der von dem Objekt oder Teilchen hindurchgelassenen oder reflektierten Wellen auf ein Dispersionselement (41), das sie so ablenkt, dass ein Lichtspektrum der Lichtintensität in verschiedenen Zonen des Spektrums entsprechend Bereichen von verschiedenen Wellenlängen erhalten wird,
- den Nachweis der Lichtintensität in jeder der Zonen,
- den Vergleich dieser Intensität mit einem oder mehreren spezifischen Schwellenwerten, die dieser Zone zugeschrieben sind und die zuvor gespeichert wurden,
- das Ergebnis dieses Vergleichs, das zu der Bestimmung des Identifizierungscodes des zu rückgewinnenden Materials beiträgt.

9. Verfahren nach einem der vorhergehenden Ansprüche,
**dadurch gekennzeichnet, dass** die Bestimmung der Zonen des zu analysierenden Spektrums sowie der verschiedenen Parameter, die für jede dieser Zonen bereitgestellt wurden, von dem System ausgehend von den oben genannten vorab gespeicherten spektralphotometrischen Identifizierungsdaten durchgeführt werden.

10. Verfahren nach einem der vorhergehenden Ansprüche,
**dadurch gekennzeichnet, dass** der oben genannte Identifizierungscode weiterhin Parameter umfasst, die sich auf folgendes beziehen:
- die Gegenwart von Fluoreszenz oder nicht, und/oder
- eine Fluoreszenzdauer größer oder kleiner als mindestens ein Schwellenwert, und/oder
- das Vorliegen oder die Abwesenheit eines Peaks bei einer voreingestellten Wellenlänge, sowie gegebenenfalls auf die Amplitude und/oder die Breite dieses Peaks, und/oder
- Emissionspeakhöhen entsprechend einer Konzentration von Markern von größer oder kleiner als ein oder mehrere vordefinierte Schwellenwerte.

11. Verfahren nach einem der vorhergehenden Ansprüche,
**dadurch gekennzeichnet, dass** zur Erhöhung der Anzahl von möglichen Kombinationen verschiedene Konzentrationen von Markern verwendet werden, um verschiedene Intensitätslinien zu erhalten.

12. Verfahren nach Anspruch 8,
**dadurch gekennzeichnet, dass** die Lichtintensität des oben genannten Strahls in Abhängigkeit von dem Abstand zwischen dem Wert der Lichtintensität, die in einem vorbestimmten Frequenzbereich nachgewiesen wird, der nicht von der Gegenwart der Marker betroffen ist, und einem vorbestimmten Sollwert reguliert wird.

13. Verfahren nach einem der vorhergehenden Ansprüche,
**dadurch gekennzeichnet, dass** einer der in einem Identifizierungscode vorhandenen Marker als Eichmaß verwendet wird, das als Referenz zur Bestimmung der Gegenwart, der Abwesenheit und/oder der Intensität der anderen Marker dient, insbesondere im Hinblick auf die Durchführung von Korrekturen und Eichungen, die die Beseitigung von Rauschen erlauben, das beispielsweise von der Zusammensetzung des Teilchens oder des Objekts, von Einstellungsschwankungen, wie Einfallswinkel, Abstand zum Objekt, oder von transparentem Material, das dieses Teilchen oder dieses Objekt umhüllt oder umgibt, oder von einer Verkleinerung des Signals auf Grund der Gegenwart von Fremdprodukten (Schmutz,...) oder von einer möglichen Verkleinerung des Signals als Ergebnis einer verlängerten Exposition gegenüber ungünstigen Witterungseinflüssen oder von der Alterung des Objekts herrühren kann.

14. Verfahren nach Anspruch 13,
**dadurch gekennzeichnet, dass** es weiterhin folgendes umfasst:
- die vorherige Wahl von einem der oben genannten Marker und die Zuordnung dieses Markers als Eichmaß zu einem Typ von Produkt oder von Substanz und/oder für einen vorbestimmten Zeitraum,
- die Zuordnung dieses Markers zu Identifizierungsdaten und Daten, die für seine Eichmaß-Funktion spezifisch sind, und die Speicherung dieser Daten,
- während einer Authentifizierungsphase, die Bestimmung des als Eichmaß verwendeten Markers ausgehend von zuvor gespeicherten Identifizierungsdaten, der Vergleich von zu diesem Eichmarker relativen Daten, die bei der spektralphotometrischen Analyse des Objekts oder des Teilchens erhalten werden, mit den oben genannten zuvor gespeicherten spezifischen Daten,
- die Berechnung von auf die spektralphotometrische Analyse zu übertragende Korrektur aus dem Ergebnis dieses Vergleichs,
- den Nachweis der Gegenwart, der Abwesenheit und/oder der Intensität der Marker aus den Ergebnissen der korrigierten spektralphotometrischen Analyse,
- die Bestimmung des Authentifizierungscodes des Objekts oder der Substanz aus der Gegenwart, der Abwesenheit und/oder der Intensität der Marker.
